# EUROPEAN PATENT APPLICATION

(11) **EP 3 594 525 A1**
(43) Date of publication of application: **15.01.2020**
(21) Application number: 18183229.6
(22) Date of filing: 12.07.2018
(51) Int. Cl.: F16D 69/04, F16D 69/00

(54) **BRAKE PAD, DISK BRAKE ASSEMBLY, AND VEHICLE**

(71) Applicant: MAT Commercial Vehicle Products GmbH, 65555 Limburg-Offheim (DE)
(72) Inventor: WERDER, Marco, 57562 Herdorf (DE); KERSTEN, Fred, 51688 Wipperfürth (DE); DLUGOSCH, Franz-Josef, 56566 Neuwied (DE)
(74) Representative: Richardt Patentanwälte PartG mbB

(57) **Abstract**

The invention provides for a method of manufacturing a brake pad (600, 800, 900) comprising a friction pad (602) and a mounting structure (604). The method comprises: providing (100) a cure mold (102); filling (200, 300) the cure mold with granulated thermoset plastic (304) to form the mounting structure and particulate friction material (204) to form the friction pad; and press curing (500) in a single step the filled cure mold to form the brake pad.

## Description

### Field of the invention

The invention relates to brake pads.

### Background and related art

Brake pads are used to slow or stop a vehicle by converting mechanical energy into heat through friction. Brake pads have a friction pad which is pressed against a brake disk using a brake caliper. The brake caliper typically squeezes a pair friction pads against the brake disk. The friction pad may comprise a variety of functional materials such as both abrasives and lubricants. Brake pads are manufactured by attaching a friction pad to a carrier plate. The carrier plate is used to hold the brake pad in the brake caliper.

United States patent US 6,267,206 B1 discloses a brake lining for disk brakes comprising a carrier plate and a friction material block fixed thereon made of a pressed friction material. The friction material block being fixed positively and/or non-positively on the carrier plate. The carrier plate being made of a hard amorphous plastic rigid up to the decomposition temperature which is composed of spatially close meshed interlaced macromolecules with a high mechanical strength like for example a duroplastic, the material of the carrier plate gripping into the carrier plate free surface of the friction material block and overlapping the side walls of the friction material block placed on the carrier plate and being welded with the material of the friction material block.

### Summary

The invention provides for a method of manufacturing a brake pad, a disc brake and a vehicle in the independent claims. Embodiments are given in the dependent claims.

Embodiments may provide for an improved brake pad by manufacturing the brake pad in a single press curing step. Instead of manufacturing a friction pad and a carrier plate separately and then attaching them all of the parts of a brake pad may be formed in the single press curing step. This may have several advantages. The press curing step can form a mounting structure that is permanently attached to the friction pad. The mounting structure does not need to be a carrier plate. Forming the brake pad in a single step may allow a greater freedom of choice in the shape and design of the mounting structure.

Additionally, because the friction pad and the mounting structure are formed at the same time they may have a stronger bond then if the two are simply glued or sintered together. The brake pad may be formed from a granulated thermoset plastic to form the mounting structure and a particulate friction material to form the friction pad. The structure of the boundary layer between the mounting structure and the friction pad can be adjusted by controlling the relative size between the particulate friction material and particles of the particulate friction material.

The friction pad may comprise a number of materials that each provide different functionality like both abrasives and lubricants. In order to provide different functionalities the material used to form the friction pad is provided as a particulate friction material. The use of particulates maximizes the surface area of the functional materials and enables the different functional materials to be uniformly distributed within the friction pad. The granulated thermoset plastic on the other hand may use granules that are one or two orders of magnitude larger than the particles in average diameter. When the two materials are press cured in the same step this may make a complex surface or boundary layer between the friction pad and the mounting structure. This may increase the mechanical strength of the bond between the friction pad and the mounting structure. In some examples the average diameter of grains of the granulated thermoset plastic is between 0.5 mm and 5 mm. In some examples, the average diameter of particles of the particulate friction material is 0.05 mm to 0.5 mm in diameter. In yet other examples the average diameter of the particles of the particulate friction material is 0.005 mm to 0.05 mm in diameter.

In one aspect the invention provides for a method of manufacturing a brake pad that comprises a friction pad and a mounting structure. The friction pad may be for providing a surface to press against a disc of a disc brake system. The mounting structure may be for transferring momentum from the friction pad to a brake caliper holding the brake pad. The method comprises providing a cure mold. The method further comprises filling the cure mold with granulated thermoset plastic and particulate friction material. The method further comprises press curing in a single step the filled cure mold to form the brake pad.

This embodiment may be beneficial because the brake pad and the friction pad are formed at the same time. This may cause the interface between the two to be stronger than when a brake pad is constructed by connecting a separate friction pad and a separate mounting structure such as a plate. Embodiments may have the benefit that the brake pad is a single piece that has been formed at the same time. It may be more durable than other brake pads.

The friction pads may be added in a liquid or powder form depending upon the type or form of the filling used for the particulate friction material.

The granulated thermoset plastic could for example be Duroplast, a glass fiber and mineral filled phenolic molding compound, ISO 11469:2000, ISO 11469:2016, or PF-(MD+GF)80.

In another embodiment the granulated thermoset plastic and/or the particulate friction material is pre-heated before adding to the cure mold.

In another embodiment the cure mold is pre-heated.

In another embodiment there is a boundary layer between the friction pad and the mounting structure that forms during the single press curing step. For example the boundary layer may be a region that is 1 or 2 mm thick that comprises both the granulated thermoset plastic and the particulate friction material.

In another embodiment the filling of the cure mold with the granulated thermoset plastic and the particulate friction material comprises first filling a first portion of the cure mold with particulate friction material and then filling a second portion of the cure mold with the granulated thermoset plastic.

In another embodiment the granulated thermoset plastic forms the mounting structure and the particulate friction material forms the friction pad.

In another embodiment the first portion is filled with a particulate friction material by spraying. This embodiment may be beneficial because the particulate friction material in both a liquid and a powder form may be precisely added to the cure mold using a spraying process.

In another embodiment the second portion is filled with the granulated thermoset plastic using a dispenser. For example the dispenser could be a feed hopper or other equipment configured for adding a particular amount of granulated thermoset plastic to the second portion of the cure mold.

In another embodiment the method further comprises filling the cure mold with a particulate underlayer material between the particulate friction material and the granulated thermoset plastic. The addition of an underlayer material may be beneficial because it may enable altering the properties of the brake pad. For example the particulate underlayer material may also be functional as a friction or braking surface. However, the density of materials can be changed to change the resonance of the brake pad. Additionally, materials which are thermally insulating may also be added to a particulate underlayer. This may help reduce the chances that the mounting structure may be damaged thermally during the use of the brake pad.

In another embodiment the particulate underlayer material comprises phenolic resin, steel wool, petrol coke, glass fibers, an abrasive, aluminum oxide, a lubricant, a thermal insulator, glass fibers, mineral filling, rubber particles, and combinations thereof. The glass fibers, mineral filling and rubber particles may for example function for thermally isolating the friction pad and the mounting structure. The abrasive could for example be Al₂0₃.

In another embodiment the particulate friction material comprises a phenolic resin.

In another embodiment the granulated thermoset plastic comprises Novolac.

In another embodiment the granulated thermoset plastic comprises any one of the following: glass fibers, mineral filling and combinations thereof. The glass fibers may for example add strength to the thermoset plastic. The mineral filling may for example provide bulk which enables a reduced amount of resin to be used. The use of mineral filling may therefore make the brake pad less expensive.

In another embodiment the particulate friction material comprises any one of the following: steel wool, petrol coke, glass fibers, an abrasive, aluminum oxide, a lubricant, and combinations thereof. The wide variety of particles in the particulate friction material provides different functional aspects to the friction pad. The abrasive could for example be Al₂0₃.

In another embodiment the method further comprises partially mixing the particulate friction material and the granulated thermoset plastic to form an adhesion layer between the friction pad and the mounting structure. Typically the size of the particles in the particulate friction material to granules of the granulated thermoset plastic may have a ratio of 1-100 with the particulates in the particulate friction material being smaller. The use of the much larger granules of the granulated thermoset plastic may help to ensure that any boundary layer between the friction pad and the mounting structure is very rough. The size of the boundary layer and therefore the adhesion between the friction pad and the mounting structure can be further increased by partially mixing the particulate friction materials and granulated thermoset plastic at the boundary layer between the friction pad and the mounting structure.

In another aspect the invention provides for a brake pad being formed as a single press cured piece. The brake pad comprises a friction pad and a mounting structure. The mounting structure comprises a thermoset plastic. This embodiment may be beneficial because forming the brake pad as a single press cured piece may increase the mechanical strength between the friction pad and the mounting structure. This may result in a more robust and more durable brake pad.

In another embodiment the mounting structure is plate-shaped.

In another embodiment the mounting structure comprises a ribbed surface.

In another embodiment the brake pad further comprises an underlayer between the friction pad and the mounting structure. The single press cured piece comprises the underlayer. For example as was mentioned before, the underlayer may provide for a thermal barrier and/or to modify the resonant properties of the brake pad. Forming the underlayer also during the single press curing step may provide for a more durable brake pad.

In another embodiment the brake pad comprises a boundary layer between the friction pad and the underlayer. The boundary layer is formed for mixing a particulate friction material of the friction pad and particulate underlayer material. In some examples the boundary layer between the underlayer and the friction pad may be between 0.1 mm and 3 mm thick, preferably between 1 and 2 mm thick.

In another embodiment the brake pad comprises a boundary layer between the underlayer and the mounting structure. The boundary layer is formed for mixing a particulate underlayer material of the friction pad and granulated thermoset plastic of the mounting structure. In some examples the boundary layer between the underlayer and the mounting structure may be between 0.1 mm and 3 mm thick, preferably between 1 and 2 mm thick.

In another embodiment the underlayer material comprises any one of the following: phenolic resin, steel wool, petrol coke, glass fibers, an abrasive, aluminum oxide, a lubricant, a thermal insulator, glass fibers, mineral filling, rubber particles, and combinations thereof.

In another embodiment the friction pad comprises phenolic resin.

In another embodiment the mounting structure comprises Novolac.

In another embodiment the mounting structure comprises any one of the following: glass fibers, mineral filling, and combinations thereof.

In another embodiment the friction pad comprises any one of the following: steel wool, petrol coke, glass fibers, an abrasive, a lubricant, and combinations thereof. In another embodiment the brake pad comprises a boundary layer between the friction pad and the mounting structure. The boundary layer is a mixture of particulate friction material of the friction pad and thermoset plastic of the mounting structure. This boundary layer may provide for very strong adhesion or bond between the friction pad and the mounting structure. In some examples the boundary layer may be between 0.1 mm and 3 mm thick, preferably between 1 and 2 mm thick.

In another aspect the invention provides for a disc brake assembly comprising a brake disc, a brake caliper and a brake pad according to an embodiment. The brake caliper is configured for receiving the mounting structure of the brake pad.

In another aspect the invention provides for a vehicle comprising the disc brake assembly according to an embodiment.

It is understood that one or more of the aforementioned embodiments of the invention may be combined as long as the combined embodiments are not mutually exclusive.

### Brief description of the drawings

In the following embodiments of the invention are explained in greater detail, by way of example only, making reference to the drawings in which:
- Fig. 1: shows a cross sectional view of an example of press cure mold for manufacturing a brake pad;
- Fig. 2: illustrates the filling of a first portion of the press cure mold of Fig. 1 with a particulate friction material;
- Fig. 3: illustrates the filling of a second portion of the press cure mold of Fig. 1 with a granulate thermoset plastic;
- Fig. 4: illustrates a piston beginning to compress the granulated thermoset plastic and the particulate friction material;
- Fig. 5: illustrates the press curing a brake pad in a single step;
- Fig. 6: shows a cross sectional view of the brake pad manufacture in Fig. 5;
- Fig. 7: shows the filling of the press cure mold of Fig. 1 with a particulate friction material, a particulate underlayer material, and a granulated thermoset plastic;
- Fig. 8: shows a cross sectional view of the brake pad manufactured using the filled press cure mold of Fig. 7;
- Fig. 9: shows a cross sectional view of a further example of a brake pad; and
- Fig. 10: illustrates an example of a vehicle.

### Detailed Description

Like numbered elements in these figures are either equivalent elements or perform the same function. Elements which have been discussed previously will not necessarily be discussed in later figures if the function is equivalent.

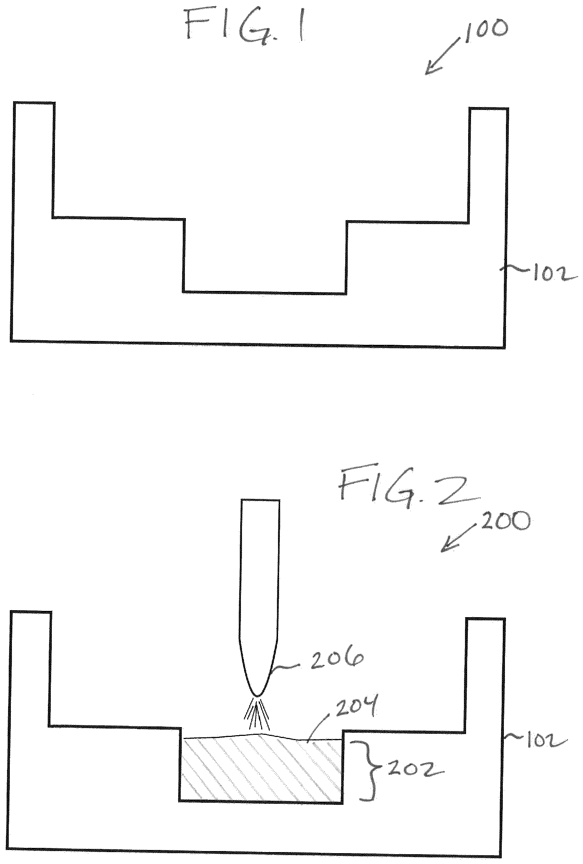

Figs. 1-5 illustrate the manufacture of a brake pad using a single press curing step. First in Fig. 1 the step of providing 100 a cure mold 102 is shown. Next in Fig. 2 the step of filling a first portion 202 of the cure mold 102 with particulate friction material 204 is shown. The particulate friction material 204 may for example be provided in either a powder or liquid form depending upon the type or form of the resin used. In this example there is a nozzle 206 which is spraying the particulate friction material 204 into the first portion 202 of the cure mold 100.

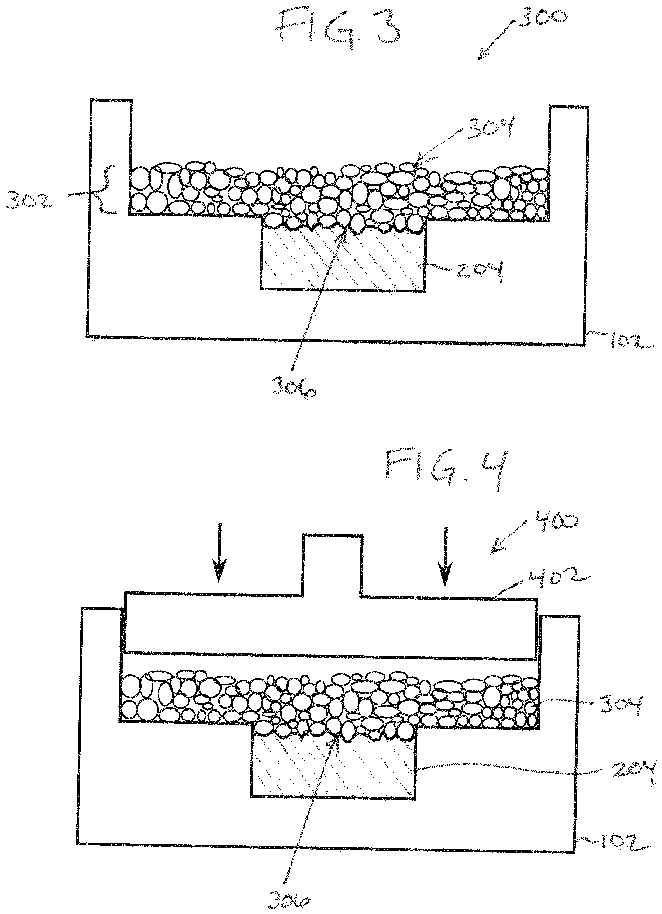

Fig. 3 shows the filling 300 of a second portion 302 of the cure mold 102 with a granulated thermoset plastic 304. After the particulate friction material 204 was filled into the cure mold 102 an amount of granulated thermoset plastic 304 was placed on top. In this example the granulated thermoset plastic 304 has grains that are much larger than the particles of the particulate friction material 204. This causes a rough boundary region 306 between the particulate friction material 204 and the granulated thermoset plastic 304.

Next in Fig. 4 it is shown the compression with a piston 402. The piston 402 continues to be depressed during the press curing process.

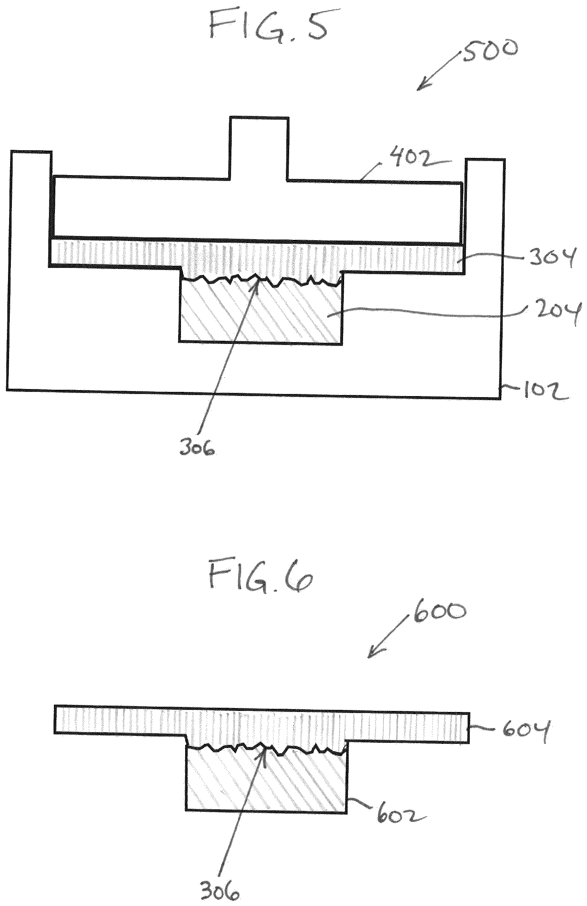

Fig. 5 shows the press curing 500 of a brake pad in a single step. During the press curing 500 the boundary region 306 between the particulate friction material 204 and the granulated thermoset plastic 304 is still visible. After the press curing 500 is finished the finished brake pad may be removed.

Fig. 6 illustrates the brake pad 600 after it has been removed from the cure mold 102. The brake pad 600 can be seen as having a friction pad 602 connected to a mounting structure 604. There is still the boundary region 306 between the friction pad 602 and the mounting structure 604. Because of the way the brake pad 600 was formed in a single step, the boundary region 306 provides a region of very strong and great adhesion between the friction pad 602 and the mounting structure 604. The bond between the friction pad 602 and the mounting structure 604 is much greater than if the friction pad 602 and the mounting structure 604 had been formed separately and then joined together or glued together.

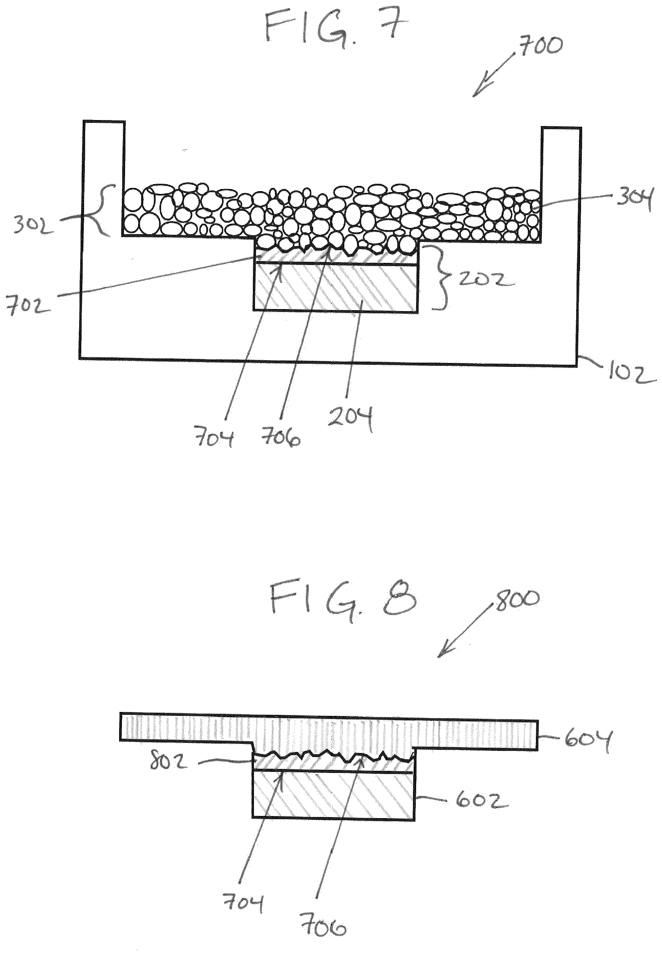

Fig. 7 illustrates another example where there is particulate underlayer material 702 filled between the particulate friction material 204 and the granulated thermoset plastic 304. Fig. 7 shows a filled 700 cure mold with particulate friction material 204, particulate underlayer material 702 and granulated thermoset plastic 304. To fill the cure mold 102 the first portion 202 of the mold 102 was first filled with the particulate friction material 204 partially and then the particulate underlayer material 702 was filled on top of this. Then the second portion 302 of the cure mold was filled with the granulated thermoset plastic 304. The particulate underlayer material 702 has similar properties to the particulate friction material 204. The particulate underlayer material 702 may for example have insulating materials such as rubber particles which help to prevent the transport of heat from the friction pad to the mounting structure. To produce a brake pad the material in the cure mold 102 in Fig. 7 may be heated and compressed with a piston as was illustrated in Figs. 4 and 5.

Fig. 8 illustrates the brake pad 800 produced from the filled cure mold 102 illustrated in Fig. 7. The brake pad 800 is similar to the brake pad 600 in Fig. 6 except there is additionally an underlayer 802 between the friction pad 602 and the mounting structure 604. In both Figs. 7 and 8 there can be seen a boundary layer 704 between the friction pad 602 and the underlayer 802. There is also another boundary layer 706 between the underlayer 802 and the mounting structure 604. The properties of the brake pad 800 can be modified by controlling the thickness and material used in the underlayer 802. Typically underlayer materials 802 are also able to function as friction pads once the friction pad 602 has been worn through. The density of the underlayer 802 may be adjusted relative to the friction pad 602 to fine tune the resonant frequency of the brake pad 800.

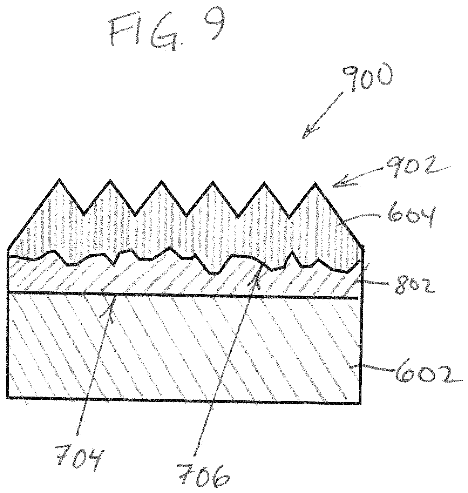

An advantage of making a brake pad using a single press curing step is that the form of the brake pad may be modified. Fig. 9 illustrates a cross-sectional view of a modified brake pad 900. In this example there is still the friction pad 602, a mounting structure 604 with an intermediate underlayer 802. In this example the shape of the mounting structure 604 has been altered. Instead of having a plate-like structure as is illustrated in Fig. 8, the mounting structure 604 has a ridged or ribbed 902 surface which may be used to lock or the brake pad in a brake caliper. The use of the single press curing step to form the brake pad 900 enables a change in the basic form and design of brake pads 900.

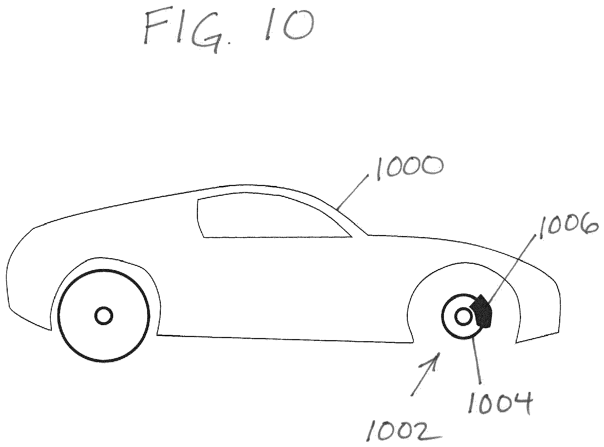

Fig. 10 shows an illustration of a vehicle 1000. The vehicle 1000 has had one wheel removed and a disc brake assembly 1002 is visible. The disc brake assembly 1002 comprises a brake disc 1004 and a brake caliper 1006. The brake caliper 1006 holds a brake pad according to an example.

### List of reference numerals

- 100: provide cure mold
- 102: cure mold
- 200: fill first portion of cure mold with particulate friction material
- 202: first portion of cure mold
- 204: particulate friction material
- 206: nozzle
- 300: fill second portion of cure mold with granulated thermoset plastic
- 302: second portion of cure mold
- 304: granulated thermoset plastic
- 306: boundary region
- 400: compressing with a piston
- 402: piston
- 500: press curing in a single step
- 600: brake pad
- 602: friction pad
- 604: mounting structure
- 700: fill cure mold with particulate friction material, particulate underlayer material, and granulated thermoset plastic
- 702: particulate underlayer material
- 704: boundary layer between particulate friction material and particulate underlayer material
- 706: boundary layer between particulate underlayer material and granulated thermoset plastic
- 800: brake pad
- 802: underlayer
- 900: brake pad
- 902: ribs
- 1000: vehicle
- 1002: disk brake assembly
- 1004: brake disk
- 1006: brake caliper

## Claims

1. A method of manufacturing a brake pad (600, 800, 900) comprising a friction pad (602) and a mounting structure (604), wherein the method comprises:
- providing (100) a cure mold (102);
- filling (200, 300) the cure mold with particulate friction material (204) to form the friction pad and with granulated thermoset plastic (304) to form the mounting structure; and
- press curing (500) in a single step the filled cure mold to form the brake pad.

2. The method of claim 1, wherein filling the cure mold with the granulated thermoset plastic and the particulate friction material comprises: filling (200) a first portion (202) of the cure mold with particulate friction material and filling (300) a second portion (304) of the cure mold with the granulated thermoset plastic.

3. The method of claim 2, wherein the method further comprises filling the cure mold with a particulate underlayer material (702) between the particulate friction material and the granulated thermoset plastic.

4. The method of claim 3, wherein the particulate underlayer material comprises phenolic resin, steel wool, petrol coke, glass fibers, an abrasive, Aluminum Oxide, a lubricant, a thermal insulator, glass fibers, mineral filling, rubber particles, and combinations thereof.

5. The method of any one of claims 1 through 3, wherein the particulate friction material comprises a phenolic resin and/or wherein the granulated thermoset plastic comprises Novolac.

6. The method of any one of the preceding claims, wherein the granulated thermoset plastic comprises any one of the following: glass fibers, mineral filling, and combinations thereof.

7. The method of any one of the preceding claims, wherein the particulate friction material comprises any one of the following: steel wool, petrol coke, glass fibers, an abrasive, Aluminum Oxide, a lubricant, and combinations thereof.

8. The method of any one of the preceding claims, wherein the method further comprises partially mixing the particulate friction material and granulated thermoset plastic to form an adhesion layer between the friction pad and a mounting structure.

9. A brake pad (600, 800, 900) being formed as a single press cured piece, wherein the brake pad comprises a friction pad (602) and a mounting structure (604), wherein the mounting structure comprises a thermoset plastic.

10. The brake pad of claim 9, brake pad further comprises an underlayer (802) between the friction pad and the mounting structure, wherein the single press cured piece comprises the underlayer, wherein the underlayer material preferably comprises any one of the following: phenolic resin, steel wool, petrol coke, glass fibers, an abrasive, Aluminum Oxide, a lubricant, a thermal insulator, glass fibers, mineral filling, rubber particles, and combinations thereof.

11. The brake pad of any one of claims 9 and 10, wherein the friction pad comprises phenolic resin and/or the mounting structure comprises Novolac.

12. The brake pad of any one of claims 9 to 11, wherein the mounting structure comprises any one of the following: glass fibers, mineral filling, and combinations thereof and/or wherein the friction pad comprises any one of the following: steel wool, petrol coke, glass fibers, an abrasive, a lubricant, and combinations thereof.

13. The brake pad of any one of claims 9 to 12, wherein the brake pad comprises a boundary layer (306) between the friction pad and the mounting structure, wherein the boundary layer comprises a mixture of particulate friction material of the friction pad and thermoset plastic of the mounting structure.

14. A disc brake assembly (1002) comprising a brake disc (1004), a brake caliper (1006), and a brake pad (600, 800, 900) according to any one of claims 9 through 13, and wherein the brake caliper is configured for receiving the mounting structure of the brake pad.

15. A vehicle comprising the disc brake assembly of claim 14.
